# EUROPÄISCHE PATENTANMELDUNG

(11) **EP 4 751 620 A1**
(43) Veröffentlichungstag der Anmeldung: **03.06.2026**
(21) Anmeldenummer: 25217399.2
(22) Anmeldetag: 20.11.2025
(51) Int. Cl.: A47J 31/44, A47J 31/06

(54) **KAFFEEVOLLAUTOMAT**

(30) Priorität: 27.11.2024 DE 102024211337
(71) Anmelder: BSH Hausgeräte GmbH, 81739 München (DE)
(72) Erfinder: Kocher, Jan, 83278 Traunstein (DE); Schnellinger, Christian, 83379 Wonneberg (DE); Eder, Florian, 83132 Pittenhart (DE); Liebing, Marc, 85598 Baldham (DE)

(57) **Zusammenfassung**

Die vorliegende Erfindung betrifft einen Kaffeevollautomaten (1) mit einer Ausgabeeinrichtung (2) zur Ausgabe eines Getränks, wobei ein von einem auszugebenden Getränk durchströmbares Getränkezubereitungsteil (3) vorgesehen ist, das an oder unter der Ausgabeeinrichtung (2) fixierbar oder unterstellbar ist.

Hierdurch lässt sich beispielsweise vergleichsweise einfach Filterkaffee oder sogenannter cold brewed coffee herstellen und dadurch eine mit dem Kaffeevollautomaten (1) erzeugbare Getränkevielfalt erheblich steigern.

## Beschreibung

Die vorliegende Erfindung betrifft einen Kaffeevollautomaten mit einer Ausgabeeinrichtung zur Ausgabe eines Getränks.

Moderne Kaffeevollautomaten sind in der Lage, unterschiedlichste Getränke, insbesondere Kaffeegetränke und Kaffee-Mischgetränke, mit einem breiten Spektrum an Anpassungsmöglichkeiten an unterschiedlichste Geschmäcker auszugeben. Zur Herstellung der Kaffeegetränke bzw. Kaffee-Mischgetränke wird üblicherweise heißes Wasser unter einem vordefinierten Druck in eine Brühkammer geleitet und dort Kaffeepulver gebrüht. Über einen separaten Milchauslauf bzw. Milchschaum-Auslauf können darüber hinaus Kaffee-Milch-Mischgetränke unterschiedlichster Art, wie beispielsweise ein Espresso-Macchiato bzw. ein Latte-Macchiato, hergestellt werden. Trotzdem stößt die Variantenvielfalt zunehmend an ihre Grenzen, insbesondere, sofern beispielsweise gänzlich andere Kaffeearten, wie beispielsweise ein Filterkaffee, oder auch neue Trends, wie sogenannter cold brewed coffee gewünscht sind.

Für einen Filterkaffee kann ein derartiger Kaffeevollautomat üblicherweise nicht genutzt werden bzw. es wird dann mit dem Kaffeevollautomaten heißes Wasser in einen Behälter gefüllt, mittels welchem dann in einem separaten Filter der Filterkaffee gebrüht wird. Auch sogenannter cold brewed coffee kann mit gängigen Kaffeevollautomaten nicht zufriedenstellend hergestellt werden, da zum Herstellen eines derartigen cold brewed coffee üblicherweise zunächst Eiswürfel aus Wasser in eine Tasse eingelegt werden, woraufhin anschließend mit dem Kaffeevollautomaten gebrühter Kaffee ebenfalls in die Tasse eingefüllt wird. Dies erfordert nicht nur einen vergleichsweise hohen Aufwand, insbesondere in Bezug auf die separate Herstellung der Eiswürfel, sondern beeinträchtigt darüber hinaus ein Geschmacksempfinden erheblich, da die in die Tasse eingelegten Eiswürfel den Kaffee verwässern und es sensorisch nicht möglich ist, ein richtiges Volumen zwischen Kaffee und Eiswürfel anzugeben, da ein Nutzer des Kaffeeautomaten ein nahezu beliebiges Volumen an Wasser-Eis in die Tasse geben kann.

Auch das Handling von gefrorenen Eiswürfeln bei der Entnahme derselben aus beispielsweise einem Gefrierfach ist schwierig, da die Eiswürfel äußerst glatt sind und gerne aus der Hand bzw. von einem Löffel rutschen können. Um dem entgegenzuwirken kann, selbstverständlich das im Kaffeevollautomaten gemahlene und in der Brühkammer vorhandene Kaffeepulver auch mit kaltem Wasser übergossen werden, was jedoch nicht nur geschmacklich erhebliche Nachteile mit sich bringt, sondern auch einen wirklichen cold brewed coffee nicht erzeugen kann, da das derartig hergestellte Kaffeegetränk immer nur so kalt sein kann, wie das Wasser in einem Wassertank des Kaffeevollautomaten.

Auch können mit herkömmlichen Kaffeevollautomaten üblicherweise lediglich Kaffee- bzw. Kaffee-Mischgetränke hergestellt werden, wodurch die Variantenvielfalt, insbesondere im Hinblick auf andere Geschmacksmischungen, ebenfalls eingeschränkt ist.

Die vorliegende Erfindung beschäftigt daher mit dem Problem, für einen Kaffeevollautomaten eine verbesserte oder zumindest eine alternative Ausführungsform anzugeben, welche insbesondere eine deutlich erhöhte Variantenvielfalt herzustellender Getränke ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Kaffeevollautomaten mit einer Ausgabeeinrichtung zur Ausgabe eines Getränks mit einem zusätzlichen und von dem auszugebenden Getränk durchströmbaren Getränkezubereitungsteil auszustatten, das an oder unter der Ausgabeeinrichtung fixierbar oder unterstellbar ist. Mittels dieses Getränkezubereitungsteils lässt sich die Variantenvielfalt der mit dem erfindungsgemäßen Kaffeevollautomaten herzustellenden Getränke erheblich steigern, insbesondere durch die Verwendung der nachfolgend beschriebenen Varianten des Getränkezubereitungsteils. Ein derartiges Getränkezubereitungsteil kann beispielsweise in einem separaten Staufach in dem Kaffeevollautomaten untergebracht oder als Zusatzteil im Fachhandel erhältlich sein.

Zweckmäßig ist die Ausgabeeinrichtung ein Kaffeeauslauf, Wasserauslauf und/oder ein Milchauslauf. Über die Ausgabeeinrichtung ist es somit möglich, Kaffee, Wasser oder Milch auszugeben, insbesondere sogar wahlweise heißes Wasser bzw. kaltes Wasser oder heiße Milch bzw. kalte Milch oder heißer Kaffee oder kalt "gebrühter" Kaffee (cold-brewed coffee). Im Zusammenspiel mit dem von dem auszugebenden Getränk durchströmbaren und an oder unter der Ausgabeeinrichtung fixierbaren oder unterstellbaren Getränkezubereitungsteil kann mit einer derartig ausgestalteten Ausgabeeinrichtung eine hohe Variantenvielfalt an auszugebenden Getränken erreicht werden. Beispielsweise können in dem Getränkezubereitungsteil auch Aroma- bzw. Gewürzstoffe aber auch Kakaopulver bzw. Teepulver oder andere Getränkepulver eingefüllt werden, wodurch sich eine nahezu unbegrenzte Variantenvielfalt an unterschiedlichsten herstellbaren Getränken ergibt.

Bei einer vorteilhaften Weiterbildung des erfindungsgemäßen Kaffeevollautomaten ist das Getränkezubereitungsteil als Filtereinrichtung ausgebildet. Eine derartige Filtereinrichtung ermöglicht im Zusammenspiel mit einer als Wasserauslauf ausgebildeten Ausgabeeinrichtung die Herstellung eines herkömmlichen Filterkaffees, wodurch mit dem erfindungsgemäßen Kaffeevollautomaten insbesondere einem neuen Trend, nämlich der Vorliebe für Filterkaffee, Rechnung getragen werden kann. Eine derartige Filtereinrichtung kann selbstverständlich aber auch zum Aufbrühen von Teepulver oder anderen Getränkepulvern, insbesondere Instantpulvern, genutzt werden, sodass mittels eines derartigen und als Filtereinrichtung ausgebildeten Getränkezubereitungsteils ebenfalls eine nahezu unerschöpfliche Vielfalt an unterschiedlichsten Getränken herstellbar ist.

Zweckmäßig ist die Filtereinrichtung als Teil der Brüheinheit des Kaffeevollautomaten oder als Filterträger ausgebildet. Die Filtereinrichtung bzw. der Filterträger kann somit ein Bestandteil einer ohnehin bereits in dem Kaffeevollautomaten angeordneten Espresso-Brüheinheit oder zusätzlich zu dieser ausgebildet sein. Alternativ kann die Filtereinrichtung bzw. der Filterträger auch als entnehmbare Filtereinrichtung bzw. als entnehmbarer Filterträger ausgebildet sein, wobei eine derartige entnehmbare Filtereinrichtung bzw. ein derartiger entnehmbarer Filterträger beispielsweise in einem entsprechenden Aufbewahrungsfach am Kaffeevollautomaten untergebracht werden kann. Ist die Filtereinrichtung als Teil der Brüheinheit des Kaffeevollautomaten oder als Filterträger ausgebildet, ist es denkbar, dass die Filtereinrichtung oder der Filterträger aus dem Kaffeevollautomaten entnommen werden kann, was den großen Vorteil bietet, dass der Kaffeevollautomat auch als eigenständiges Mahlwerk genutzt werden kann. Dabei ist denkbar, dass beispielsweise das kaffeevollautomateneigene Mahlwerk so ausgebildet ist, dass von diesem gemahlenes Kaffeepulver/Kaffeemehl in die als Teil der Brüheinheit ausgebildete Filtereinrichtung oder den Filterträger gelangt und dann aus dem Kaffeevollautomaten entnommen werden kann. Die als Teil der Brüheinheit ausgebildete Filtereinrichtung oder der Filterträger kann dann beispielsweise unter dem Wasserauslauf, hier einem Heißwasserauslauf, positioniert, insbesondere fixiert, werden, woraufhin herkömmlicher Filterkaffee vergleichsweise einfach herstellbar ist.

Bei einer vorteilhaften Weiterbildung des erfindungsgemäßen Kaffeevollautomaten ist die Filtereinrichtung als Siebträger ausgebildet. Ein derartiger Siebträger bietet den großen Vorteil, dass das darin angeordnete Kaffeemehl noch komprimiert werden kann und Kaffee äußerst individuell, beispielsweise in der Art eines Baristas, herstellbar ist. Hierdurch kann mit dem erfindungsgemäßen Kaffeevollautomaten eine besonders traditionelle Herstellung von Espresso ermöglicht werden, wobei beispielsweise mittels des kaffeevollautomateneigenen Mahlwerks ein Mahlgrad individuell einstellbar und dadurch an individuelle Bedürfnisse anpassbar ist. Durch die Möglichkeit, den Kaffeevollautomaten auch als Siebträgermaschine zu nutzen, kann einem weit verbreiteten Wunsch von Nutzern, nämlich dem der Kaffeezubereitung in der Art eines Baristas, Rechnung getragen werden. In diesem Fall müsste das Getränkezubereitungsteil über eine entsprechende Halterung an einem Ausgang der Ausgabeeinrichtung druckdicht anbringbar sein. Eine derartige druckdichte Halterung kann beispielsweise über einen entsprechenden Bajonettverschluss erreicht werden.

Bei einer weiteren vorteilhaften Ausführungsform des erfindungsgemäßen Kaffeevollautomaten ist das Getränkezubereitungsteil als Kühlkörperaufnahme ausgebildet. Eine derartige Kühlkörperaufnahme kann beispielsweise in der Art einer Aufbewahrungsschale ausgebildet sein, welche unter der Ausgabeeinrichtung einhängbar ist. In diesem Fall ist die Ausgabeeinrichtung als Kaffeeauslass ausgebildet. In diese Kühlkörperaufnahme können Kühlkörper, beispielsweise gekühlte Edelstahlkörper, eingelegt werden, wodurch der mit dem Kaffeevollautomaten hergestellte Kaffee vor dem Eintritt in einen Getränkebehälter die Kühlkörper überströmt und dadurch gekühlt wird, wodurch insbesondere ein sogenannter cold brewed coffee (kalt gebrühter bzw. kalt übergossener Kaffee) herstellbar ist, ohne dass hierfür die Nachteile der bislang hierzu verwendeten Eiswürfel aus Wasser auftreten. Konkret bietet somit eine derartige Kühlkörperaufnahme die Möglichkeit, einen nicht verwässerten und einfach herzustellenden cold brewed coffee auszugeben.

Bei einer besonders bevorzugten Ausführungsform des erfindungsgemäßen Kaffeevollautomaten ist ein Kühlfach zum Bevorraten und Kühlen von wiederverwendbaren Kühlkörpern vorgesehen. Derartige wiederverwendbare Kühlkörper können beispielsweise Edelstahleiswürfel sein, wobei der Begriff "Eiswürfel" lediglich beschreiben soll, dass mit derartigen Kühlkörpern ein Getränk im Sinne von Eiswürfel kühlbar ist, ohne jedoch diese zu verwässern, wie dies bei einem langsamen Auflösen der Eiswürfel aus gefrorenem Wasser der Fall ist. Weist der Kaffeevollautomat ein derartiges Kühlfach auf, so können in diesem die Kühlkörper gelagert werden, bevor sie zur Herstellung, beispielsweise des cold brewed coffees in die Kühlkörperaufnahme eingelegt und von heißem Kaffee überströmt werden. Dabei ist selbstverständlich klar, dass derartige Kühlkörper auch in separaten Kühlgeräten, wie beispielsweise einem Gefrierfach eines Kühlschranks, kühlbar sind.

Bei einer weiteren bevorzugten Ausführungsform des erfindungsgemäßen Kaffeevollautomaten ist der Wasserauslauf als Heißwasserauslauf oder als Kaltwasserauslauf ausgebildet. Die Ausbildung als Heißwasserauslauf bietet dabei den Vorteil, zusammen mit dem Getränkezubereitungsteil unterschiedlichste Heißgetränke herstellen zu können, beispielsweise auch Tee oder Filterkaffee. Die zuletzt genannte Anzahl an unterschiedlichster Getränken kann selbstverständlich auch mittels eines Wasserauslaufs hergestellt werden, der als Kaltwasserauslauf ausgebildet ist, sofern die zuvor genannten Getränkepulver mit kaltem Wasser löslich sind. Ein derartiger als Kaltwasserauslauf ausgebildeter Wasserauslauf bietet darüber hinaus den großen Vorteil, dass beispielsweise durch eine tröpfchenweise Kaltwasserabgabe cold brewed coffee über Nacht herstellbar ist. Selbstverständlich können für derartige Kaffeevollautomaten auch unterschiedlichste Gewürz-, Aromen- oder Sirup-Zusätze verwendet und vertrieben werden. Mittels eines derartigen als Kaltwasserauslauf ausgebildeten Wasserauslaufs können auch ein Eistee, Limonaden bzw. isotonische Fitnessgetränke hergestellt werden.

Bei einer besonders bevorzugten Ausführungsform des erfindungsgemäßen Kaffeevollautomaten ist der Milchauslauf als Heißmilchauslauf oder als Kaltmilchauslauf ausgebildet. Ist der Milchauslauf als Heißmilchauslauf ausgebildet, so kann zusammen mit einem als Aufnahmefach für Kakaopulver ausgebildeten Getränkezubereitungsteil heiße Schokolade hergestellt werden, was im Unterschied zu gängigen Kaffeevollautomaten dann mit Milch möglich ist und nicht nur mit Wasser. Bei einem als Kaltmilchauslauf ausgebildeten Milchauslauf, unter welchem zusätzlich noch ein als Kühlkörperaufnahme mit darin angeordneten Kühlkörpern ausgebildetes Getränkezubereitungsteil angeordnet ist, können insbesondere im Sommer äußerst erfrischende Milch-Shakes, wie beispielsweise eine kalte Erdbeermilch, hergestellt werden.

Ist die Ausgabeeinrichtung ein Kaffeeauslass, so kann dieser als Heißkaffeeauslauf oder als cold-brewed-coffee-Auslauf (Kaltkaffeeauslauf) ausgebildet sein. Mit einem als Kaltkaffeeauslauf bzw. cold-brewed-coffee-Auslauf ausgebildeten Kaffeeauslauf kann das in einer Brühkammer angeordnete Kaffeemehl mit kaltem Wasser überströmt werden, sodass bereits cold-brewed-coffee über die Ausgabeeinrichtung ausgegeben werden kann. Dieser cold-brewed-coffee kann zusammen mit einem als Kühlkörperaufnahme ausgebildeten Getränkezubereitungsteil nochmals abgekühlt werden, wodurch sehr kalter cold-brewed-coffee vergleichsweise einfach herstellbar ist. Wird eine solche Kühlkörperaufnahme nicht vorgesehen, so kann trotzdem cold-brewed-coffee hergestellt werden, wobei die Temperatur dieses cold-brewed-coffees nicht unter die Temperatur des Wassers in einem Wassertank des Kaffeevollautomaten sinkt. Ein Überströmen des Kaffeepulvers kann dabei aber auch mit heißem Wasser erfolgen, wobei der so heißgebrühte Kaffee anschließend über die in der Kühlkörperaufnahme angeordneten Kühlkörper läuft und dort gekühlt wird.

Alles in allem kann mit dem erfindungsgemäßen Kaffeevollautomaten eine im Vergleich zu bisher bekannten Kaffeevollautomaten erhebliche Steigerung einer Variantenvielfalt der herstellbaren Getränke erreicht werden, wodurch sich eine erhebliche Komfortsteigerung für einen Nutzer ergibt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Figur 1: einen erfindungsgemäßen Kaffeevollautomaten,
- Figur 2: eine weitere mögliche Ausführungsform des erfindungsgemäßen Kaffeevollautomaten,
- Figur 3: eine Seitenansicht auf einen erfindungsgemäßen Kaffeevollautomaten mit einem als Kühlkörperaufnahme ausgebildeten Getränkezubereitungsteil in abgenommenen Zustand,
- Figur 4: eine Schrägansicht von vorne auf einen erfindungsgemäßen Kaffeevollautomaten mit einem an der Ausgabeeinrichtung angebauten und als Kühlkörperaufnahme ausgebildeten Getränkezubereitungsteil,
- Figur 5: eine mögliche Ausführungsform eines wiederverwendbaren Kühlkörpers.

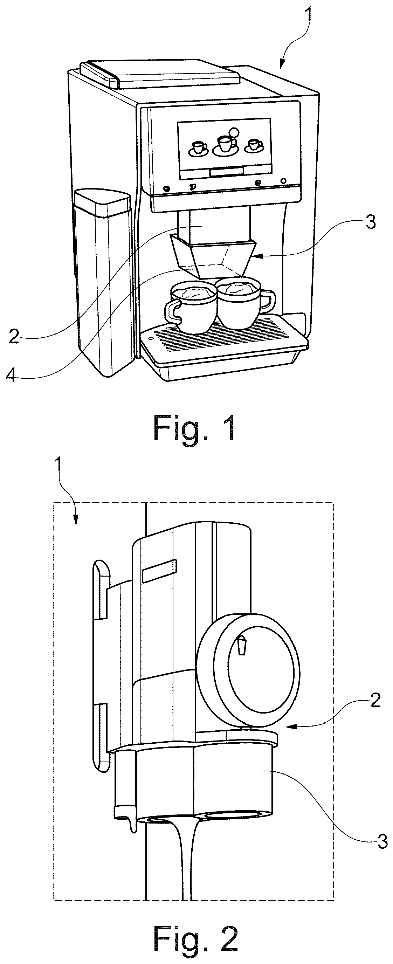

Entsprechend den Figuren 1 - 4, weist ein erfindungsgemäßer Kaffeevollautomat 1 eine Ausgabeeinrichtung 2 zur Ausgabe eines Getränks auf, wobei ein von dem auszugebenden Getränk durchströmbares Getränkezubereitungsteil 3 vorgesehen ist, das an oder unter der Ausgabeeinrichtung 2 fixierbar oder unterstellbar ist.

Mittels des erfindungsgemäß vorgesehenen Getränkezubereitungsteils 3 lässt sich eine Variantenvielfalt an mit dem erfindungsgemäßen Kaffeevollautomaten 1 herstellbaren Getränken erheblich steigern.

Die Ausgabeeinrichtung 2 kann dabei beispielsweise als Kaffeeauslauf, als Wasserauslauf und/oder als Milchauslauf oder als kombinierter Kaffee-, Wasser- und Milchauslauf ausgebildet sein.

Das Getränkezubereitungsteil 3 wiederum kann unterschiedlichste Ausführungsformen aufweisen, beispielsweise kann es als Filtereinrichtung 4 ausgebildet sein und dadurch in der Art eines herkömmlichen Kaffeefilters nutzbar sein. In diesem Fall kann beispielsweise mittels des in dem Kaffeevollautomaten 1 enthaltenen Mahlwerks Kaffee zu Kaffeepulver bzw. Kaffeemehl gemahlen und in das Getränkezubereitungsteil 3 eingefüllt werden. Wird dieses nun unter der Ausgabeeinrichtung 2 positioniert, kann über eine als Heißwasserauslauf ausgebildete Ausgabeeinrichtung 2 mit dem erfindungsgemäßen Kaffeevollautomaten 1 Filterkaffee hergestellt werden. Die Filtereinrichtung 4 kann dabei beispielsweise auch als Teil der Brüheinheit des erfindungsgemäßen Kaffeevollautomaten 1 oder als Filterträger ausgebildet sein, was den großen Vorteil bietet, dass das interne Mahlwerk des Kaffeevollautomaten 1 zum Mahlen des Kaffeepulvers nutzbar ist. Die Filtereinrichtung 4 oder der Filterträger kann dabei beispielsweise an der Ausgabeeinrichtung 2 eingehängt oder über entsprechende und nicht näher bezeichnete Schienen eingeschoben werden.

Ist die Ausgabeeinrichtung 2 als Kaltwasserauslauf ausgebildet, so kann beispielsweise ein sogenannter cold brewed coffee hergestellt werden.

Die Filtereinrichtung 4 kann selbstverständlich auch als Teefilter benutzt werden, sodass mit dem erfindungsgemäßen Kaffeevollautomaten 1 nicht nur Kaffee- und Kaffee-Mischgetränke herstellbar sind, sondern auch nahezu beliebige Teegetränke.

Die Filtereinrichtung 4 wiederum kann in einer besonders bevorzugten Ausführungsform auch als Siebträger ausgebildet sein, wobei in diesem Fall die als Siebträger ausgebildete Filtereinrichtung 4 über eine entsprechende Halterung, beispielsweise einen Bajonettverschluss, druckdicht an der Ausgabeeinrichtung 2 anschließbar ist. Hierdurch ist eine Nutzung des Kaffeevollautomaten als Siebträgermaschine mit einem völlig neuen Baristagefühl möglich.

In der Filtereinrichtung 4 können alternativ zu beispielsweise Kaffee oder Tee selbstverständlich auch nahezu beliebige Formen an Getränkepulvern, beispielsweise Instantpulver bzw. Brausepulver, eingefüllt und dadurch unterschiedlichste Erfrischungsgetränke hergestellt werden.

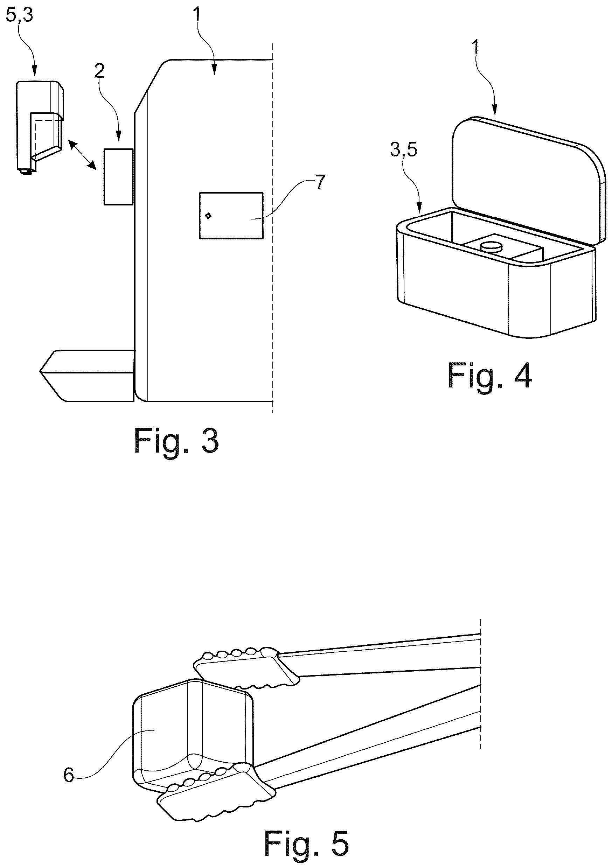

Alternativ kann das Getränkezubereitungsteil 3 auch als sogenannte Kühlkörperaufnahme 5 (vergleiche die Figuren 3 und 4) ausgebildet sein, in welcher kühlbare Kühlkörper 6 (vergleiche Fig. 5) einlegbar sind. Mittels derartiger Kühlkörpern 6, die beispielsweise aus Metall, insbesondere als Edelstahleiswürfel, ausgebildet sind, kann ein sogenannter cold brewed coffee hergestellt werden, der im Vergleich zu bislang mit herkömmlichen Eiswürfeln aus Wasser hergestelltem cold brewed coffee nicht verwässert ist. Derartige wiederverwendbarer Kühlkörper 6 werden somit zum Kühlen des herzustellenden und von dem Kaffeevollautomaten 1 auszugebenden Getränks in der Kühlkörperaufnahme 5 positioniert und von dem aus der Ausgabeeinrichtung 2 ausgegebenen Getränk, insbesondere Kaffee, überströmt, wodurch das Getränk gekühlt wird. Die Kühlkörper 6 selbst können dabei beispielsweise in einem separaten Gefrierfach stark gekühlt werden, wodurch ein besonders kalter und damit auch erfrischender cold brewed coffee herstellbar ist.

Der erfindungsgemäße Kaffeevollautomat 1 kann auch ein Kühlfach 7 (vergleiche Figur 3) aufweisen, in welchem die Kühlkörper 6 bzw. gesamte Kühlkörperaufnahme 5 zusammen mit den Kühlkörpern 6 im Nichtgebrauchszustand unterbringbar und für den Bedarf kühlbar ist. Ein derartiges Kühlfach 7, welches in dem erfindungsgemäßen Kaffeevollautomaten 1 integriert ist, bietet dabei den Vorteil, dass auf eine separate Kühlung der Kühlkörper 6 verzichtet werden kann und diese stets griffbereit am Kaffeevollautomaten 1 vorgehalten werden können.

Weist die Ausgabeeinrichtung 2 einen Milchauslauf auf, so kann dieser als Heißmilchauslauf oder als Kaltmilchauslauf ausgebildet sein, sodass zusammen mit dem Getränkezubereitungsteil 3 unterschiedlichste Milchmischgetränke, wie beispielsweise Kakaogetränke oder Erdbeer-Shakes bzw. generell Milch-Shakes, vergleichsweise einfach herstellbar sind. Denkbar ist dabei selbstverständlich auch, dass über einen Kaltmilchauslauf und ein als Kühlkörperaufnahme 5 ausgebildetes Getränkezubereitungsteil 3 äußerst kalte Milch in einen unter der Ausgabeeinrichtung 2 abgestellten Getränkebehälter ausgegeben und dort mit einem Getränkepulver, beispielsweise einem Kakaopulver oder einem anderen aromatischen Pulver, gemischt wird, wodurch mit dem erfindungsgemäßen Kaffeevollautomaten 1, insbesondere bei heißen Außentemperaturen, äußerst erfrischende Milchmischgetränke herstellbar sind.

Weist die Ausgabeeinrichtung 2 einen Kaffeeauslauf auf, so kann dieser als Heißkaffeeauslauf oder als cold-brewed-coffee-Auslauf (Kaltkaffeeauslauf) ausgebildet sein, sodass zusammen mit einem als Kühlkörperaufnahme 5 ausgebildeten Getränkezubereitungsteil 3 ein sogenannter cold-brewed-coffee vergleichsweise einfach herstellbar ist. Ein Überströmen des Kaffeepulvers kann dabei mit heißem oder kaltem Wasser erfolgen, wobei der so hergestellte Kaffee anschließend über die in der Kühlkörperaufnahme 5 angeordneten Kühlkörper 6 läuft und zusätzlich gekühlt wird.

Dabei ist selbstverständlich klar, dass in dem Getränkezubereitungsteil 3, insbesondere, sofern dieses beispielsweise als Filtereinrichtung 4 bzw. als Kühlkörperaufnahme 5 ausgebildet ist, nahezu beliebige Gewürz-, Aroma- oder andere Sirup-Zusätze für Milch bzw. Milchschaum bzw. Kaffeegetränke oder für Wasser einbringbar sind.

Mit dem erfindungsgemäßen Kaffeevollautomaten 1 ist es erstmals möglich, abweichend von den bislang bekannten Kaffee- bzw. Kaffee-Mischgetränken auch völlig neuartige Getränke, wie beispielsweise kalte Kakaogetränke bzw. cold brewed coffee herzustellen, ohne dass dafür beispielsweise wie bislang Eiswürfel aus Wasser benutzt werden müssen, die nicht nur schwierig und umständlich in der Handhabung sind, sondern auch einen Geschmack des herzustellenden Getränks erheblich beeinflussen, da sie dieses verwässern.

Ist beispielsweise in dem erfindungsgemäßen Kaffeevollautomaten 1 noch ein Kühlfach 7 vorgesehen, so lassen sich dort Kühlkörper 6, beispielsweise Edelstahleiswürfel, kühlen, die dann direkt in das Getränkezubereitungsteil 3 eingelegt werden können, sodass beispielsweise Kaffee direkt über diese Kühlkörper 6 geleitet und dadurch vergleichsweise einfach sogenannter cold brewed coffee herstellbar ist. Denn ist auch denkbar, dass derartige Kühlkörper 6 in separaten Kühleinrichtungen, beispielsweise Gefrierfächern, bevorratet und gekühlt werden.

Eine Fixierung bzw. Anordnung des Getränkezubereitungsteils 3 an der Ausgabeeinrichtung 2 kann dabei beispielsweise über eine entsprechende Halterung bzw. über entsprechende Schienen erfolgen, sodass das Getränkezubereitungsteil 3 beispielsweise analog zu einer Schublade unter der Ausgabeeinrichtung 2 einfach eingeschoben und zu Reinigungszwecken auch einfach entnommen werden kann.

Ein weiterer großer Vorteil besteht darin, dass ein derartiges Getränkezubereitungsteil 3 auch separat im Zubehörhandel angeboten werden kann, sodass in diesem Fall lediglich die Kaffeevollautomaten 1 zur Anordnung derartiger Getränkezubereitungsteile 3 vorbereitet werden müssen.

### Bezugszeichenliste

- 1: Kaffeevollautomat
- 2: Ausgabeeinrichtung
- 3: Getränkezubereitungsteil
- 4: Filtereinrichtung
- 5: Kühlkörperaufnahme
- 6: Kühlkörper
- 7: Kühlfach

## Patentansprüche

1. Kaffeevollautomat (1) mit einer Ausgabeeinrichtung (2) zur Ausgabe eines Getränks, wobei ein von einem auszugebenden Getränk durchströmbares Getränkezubereitungsteil (3) vorgesehen ist, das an oder unter der Ausgabeeinrichtung (2) fixierbar oder unterstellbar ist.

2. Kaffeevollautomat (1) nach Anspruch 1,
**dadurch gekennzeichnet, dass**
die Ausgabeeinrichtung (2) ein Kaffeeauslauf, Wasserauslauf und/oder ein Milchauslauf ist.

3. Kaffeevollautomat (1) nach Anspruch 1 oder 2,
**dadurch gekennzeichnet, dass**
das Getränkezubereitungsteil (3) als Filtereinrichtung (4) ausgebildet ist.

4. Kaffeevollautomat (1) nach Anspruch 3,
**dadurch gekennzeichnet, dass**
die Filtereinrichtung (4) als Teil der Brüheinheit des Kaffeevollautomaten (1) oder als Filterträger ausgebildet ist.

5. Kaffeevollautomat (1) nach Anspruch 3,
**dadurch gekennzeichnet, dass**
die Filtereinrichtung (4) als Siebträger ausgebildet ist.

6. Kaffeevollautomat (1) nach einem der vorhergehenden Ansprüche,
**dadurch gekennzeichnet, dass**
das Getränkezubereitungsteil (3) als Kühlkörperaufnahme (5) zur Aufnahme von Kühlkörpern (6) ausgebildet ist.

7. Kaffeevollautomat (1) nach einem der vorhergehenden Ansprüche,
**dadurch gekennzeichnet, dass**
ein Kühlfach (7) zum Bevorraten und Kühlen von wiederverwendbaren Kühlkörpern (6) vorgesehen ist.

8. Kaffeevollautomat (1) nach einem der vorhergehenden Ansprüche,
**dadurch gekennzeichnet, dass**
zumindest ein wiederverwendbarer Kühlkörper (6) als Edelstahleiswürfel ausgebildet ist.

9. Kaffeevollautomat (1) nach einem der Ansprüche 2 bis 8,
**dadurch gekennzeichnet, dass**
der Wasserauslauf als Heißwasserauslauf oder als Kaltwasserauslauf ausgebildet ist.

10. Kaffeevollautomat (1) nach einem der Ansprüche 2 bis 9,
**dadurch gekennzeichnet, dass**
der Milchauslauf als Heißmilchauslauf oder als Kaltmilchauslauf ausgebildet ist.

11. Kaffeevollautomat (1) nach einem der Ansprüche 2 bis 10,
**dadurch gekennzeichnet, dass**
der Kaffeeauslauf als Heißkaffeeauslauf oder als cold-brewed-coffee-Auslauf ausgebildet ist.
